# EUROPEAN PATENT APPLICATION

(11) **EP 3 193 142 A2**
(43) Date of publication of application: **19.07.2017**
(21) Application number: 16204114.9
(22) Date of filing: 14.12.2016
(51) Int. Cl.: G01D 5/20, H02K 16/02, H02K 21/04

(54) **FIXING STRUCTURE OF RESOLVER ROTOR AND FIXING STRUCTURE OF ROTATION BODY FOR MOTOR**

(30) Priority: 24.12.2015 JP 2015252596; 24.12.2015 JP 2015252597
(71) Applicant: AISIN SEIKI KABUSHIKI KAISHA, Kariya-shi Aichi-ken 448-8650 (JP)
(72) Inventor: YAMADA, Toshihiko, Kariya-shi, Aichi-ken,, 448-8650 (JP); TSUZUKI, Takanori, Kariya-shi, Aichi-ken,, 448-8650 (JP)
(74) Representative: Winter, Brandl, Fürniss, Hübner, Röss, Kaiser, Polte - Partnerschaft mbB

(57) **Abstract**

A fixing structure of a resolver rotor includes: a rotation shaft (14, 114); and resolver rotors (31, 32, 131,132) that are inserted to an outer peripheral surface of the rotation shaft from the same side, wherein each of the resolver rotors includes claw portions (43, 143, 63) intermittently abutting against the rotation shaft along a circumferential direction of the rotation shaft, and wherein when viewed in a direction along a longitudinal direction of the rotation shaft, each of the resolver rotors is fixed to the rotation shaft such that a part of regions, in which claw portions of the resolver rotors inserted to the rotation shaft later abut against an outer peripheral surface of the rotation shaft, is disposed in a position different from regions in which the claw portions of the resolver rotor that is firstly inserted abuts against the outer peripheral surface of the rotation shaft.

## Description

### TECHNICAL FIELD

This disclosure relates to a fixing structure of a resolver rotor for inserting and fixing a resolver rotor to a rotation shaft and a fixing structure of a rotation body for a motor.

### BACKGROUND DISCUSSION

A resolver is configured by inserting and fixing a resolver rotor having a detection surface for detecting a rotation angle on an outer peripheral surface to a rotation shaft. In a technique described in JP 2012-93101A (Reference 1), a resolver rotor is formed by laminating steel plates. A claw portion is provided on an inner peripheral surface of one steel plate provided at an end of the laminated steel plates in the axial direction or the inner peripheral surfaces of two laminated steel plates provided at both end portions of the laminated steel plates in the axial direction. In addition, a recessed portion that is recessed in a radial direction on both sides of the claw portion in a circumferential direction is formed in an inner periphery portion of the steel plate of the end portion in which the claw portion is provided. The resolver rotor is press-fitted and fixed to an outer peripheral surface of a rotation shaft only by the claw portion that is provided in the steel plate in the end portion and inner peripheral surfaces of intermediate laminated steel plates that are provided in an intermediate portion of the laminated steel plates in the axial direction do not abut against the outer peripheral surface of the rotation shaft.

In addition, when inserting and fixing the resolver rotor to the rotation shaft, for example, in a case where a press-fitting length in the axial direction is long with respect to the rotation shaft, the resolver rotor is unlikely to be press-fitted to the rotation shaft. In such a case, the resolver rotor is fixed to the rotation shaft via a cylindrical member. In JP 2010-25700A (Reference 2), a configuration, in which a resolver rotor is fixed to a rotation shaft via a cylindrical collar member, is disclosed. When the cylindrical member can be press-fitted to the rotation shaft after the resolver rotor is mounted on the cylindrical member on an outer periphery side and an assembling property of the resolver rotor with respect to the rotation shaft is improved.

In the technique described in Reference 1, a motor rotor and the resolver rotor are respectively inserted and fixed to the rotation shaft. In a case where a plurality of motors are provided in the rotation shaft, in order to increase detection accuracy of a rotation angle of the rotation shaft, a plurality of resolver rotors are disposed in some cases. The plurality of resolver rotors are inserted and fixed from the same side as that of the rotation shaft. For example, in this case, if the outer peripheral surface of the rotation shaft is scraped by the inner peripheral surface of the resolver rotor, when the plurality of resolver rotors are fixed to the rotation shaft, there is a concern that an abutting force of the resolver rotors inserted to the rotation shaft later is lowered. As a result, particularly, a fixed phase of the resolver rotors inserted later is changed and measurement accuracy of the rotation angle of the motor is lowered.

In the technique described in Reference 2, in a case where the cylindrical member, to the outer peripheral surface of which the resolver rotors are fixed, is fixed to the rotation shaft, the cylindrical member is enlarged in diameter and deformed when being press-fitted to the rotation shaft. Therefore, it is necessary to perform position setting of the resolver rotors in consideration of a deformation amount of the cylindrical member.

### SUMMARY

Thus, in a motor having a plurality of resolver rotors, a need exists for a fixing structure of resolver rotors in which each resolver rotor can be stably fixed to a rotation shaft. In addition, a need exists for a fixing structure of the resolver rotors in which position setting of a detection surface of the resolver rotors that are fixed to the rotation shaft via a cylindrical member is easily and reliably performed.

A feature of a fixing structure of a resolver rotor according to an aspect of this disclosure resides in that the fixing structure of a resolver rotor includes a rotation shaft; and a plurality of resolver rotors that are inserted to an outer peripheral surface of the rotation shaft from the same side, in which each of the resolver rotors includes a plurality of claw portions intermittently abut against the rotation shaft along a circumferential direction of the rotation shaft, and when viewed in a direction along a longitudinal direction of the rotation shaft, each of the resolver rotors is fixed to the rotation shaft such that a part of regions, in which claw portions of the resolver rotors inserted to the rotation shaft later abut against an outer peripheral surface of the rotation shaft, is disposed in a position different from regions in which the claw portions of the resolver rotor that is firstly inserted abuts against the outer peripheral surface of the rotation shaft.

The resolver rotor measures a rotational speed of the rotation shaft and the like, and needs to be fixed so as not to be displaced with respect to the rotation shaft. As a fixing method of the resolver rotor, for example, the resolver rotor is press-fitted to the outer peripheral surface of the rotation shaft. During mounting, the resolver rotor is pushed along a surface of the rotation shaft, but in this case, an inner peripheral edge of the resolver rotor sometimes scraps the outer peripheral surface of the rotation shaft. If such scraping occurs, a fixed state of the resolver rotor that is mounted later may be unstable.

Therefore, in the configuration, a part of the region, in which the claw portions of the resolver rotor inserted to the rotation shaft later abut against the outer peripheral surface of the rotation shaft, is disposed in the position different from the regions in which the claw portions of the resolver rotor inserted to the rotation shaft firstly abut against the outer peripheral surface of the rotation shaft. That is, a part of the claw portions of the resolver rotor inserted later can abut against the portion against which the resolver rotor does not abut firstly in the outer peripheral surface of the rotation shaft and it is possible to generate a predetermined abutting force with respect to the outer peripheral surface of the rotation shaft. Therefore, it is possible to reliably fix all the plurality of resolver rotors to the rotation shaft.

Another feature of the fixing structure of a resolver rotor according to the aspect of this disclosure resides in that the claw portions included in each of the plurality of resolver rotors are provided in different positions when viewed in the direction along the longitudinal direction of the rotation shaft.

As in the configuration, for any resolver rotor inserted to the rotation shaft, the claw portions are provided in the positions different in the longitudinal direction and thereby all the claw portions of the plurality of resolver rotors abut against new surface against which other claw portions do not abut on the outer peripheral surface of the rotation shaft. Therefore, all the resolver rotors are further reliably fixed to the rotation shaft.

Another feature of the fixing structure of a resolver rotor according to the aspect of this disclosure resides in that the claw portions are provided in positions different from a radially inner side of a portion which contributes to measurement of a rotational position in an outer peripheral surface of the resolver rotor.

In a case where the resolver rotor is fixed to the rotation shaft, the claw portions of the resolver rotor are enlarged in diameter and deformed, and thereby a radially outward portion of the claw portion is also enlarged in diameter and deformed to some extent. The resolver rotor measures the rotation state using various sensors that are separately provided and in order to improve the measurement accuracy, it is necessary to stabilize a rotational orbit of a portion concerned with the measurement. Therefore, as in the configuration, the portion contributing to measurement of the rotational position in the resolver rotor is disposed in a phase different from the claw portions and thereby an influence of deformation due to the mounting of the resolver rotor on the rotation shaft is reduced.

Another feature of the fixing structure of a resolver rotor according to the aspect of this disclosure resides in that a length of the claw portion extending along the circumferential direction extends in the circumferential direction in an inner peripheral edge of the resolver rotor and is set shorter than a length between the adjacent claw portions.

According to this configuration, for example, when mounting the plurality of resolver rotors on the rotation shaft, the claw portions of both resolver rotors can be made to have different phases along the circumferential direction while each of the resolver rotors has the same shape. Particularly, as the length of the claw portion extending in the circumferential direction extends in the circumferential direction and is shorter than the length between the adjacent claw portions, a setting range of a relative phase becomes wide while the phases of the claw portions of the adjacent resolver rotors in the longitudinal direction of the rotation shaft are different. As described above, according to the configuration, it is possible to efficiently realize a configuration including the plurality of resolver rotors.

A feature of a fixing structure of a resolver rotor according to another aspect of this disclosure resides in that the fixing structure of a resolver rotor includes a rotation shaft; a resolver rotor that is provided on a radially outer side of the rotation shaft; and a cylindrical member that is provided between the rotation shaft and the resolver rotor, in which the cylindrical member has a first abutting portion that abuts against an outer peripheral surface of the rotation shaft and a second abutting portion that abuts against an inner peripheral surface of the resolver rotor, and the first abutting portion and the second abutting portion are provided in positions different from each other in a longitudinal direction of the rotation shaft.

As in this configuration, the first abutting portion abutting against the rotation shaft and the second abutting portion abutting against the resolver rotor are provided in the positions different from each other in the longitudinal direction of the rotation shaft in the portion in which the cylindrical member is provided. Therefore, it is possible to consider separately a deformation amount of the cylindrical member by press-fitting of the cylindrical member to the rotation shaft and a deformation amount of the resolver rotor by press-fitting of the resolver rotor to the cylindrical member.

For example, in a case where the first abutting portion and the second abutting portion are in the same position in the longitudinal direction of the rotation shaft, it is necessary to determine an inner diameter of the resolver rotor in consideration of a deformation amount of an enlarged diameter of the cylindrical member with respect to the rotation shaft. However, since the deformation amount of the enlarged diameter of the cylindrical member is changed according to finished diameters of the rotation shaft and the cylindrical member, and the like, it influences a press-fit strength of the resolver rotor with respect to the cylindrical member. As a result, for example, the press-fit strength of the resolver rotor becomes loose, inconvenience that the resolver rotor is relatively rotated with respect to the rotation shaft occurs.

However, according to this configuration, when the cylindrical member is press-fitted to the rotation shaft, even if the first abutting portion of the cylindrical member is enlarged in diameter, an enlarged diameter amount in the second abutting portion against which the resolver rotor abuts is reduced. Therefore, the press-fit strength of the resolver rotor with respect to the cylindrical member is stabilized and it is possible to reliably fix the resolver rotor to the cylindrical member.

As described above, even in a case where the cylindrical member has to be intervened between the resolver rotor and the rotation shaft as a separate member, it is possible to reliably fix the resolver rotor.

Another feature of the fixing structure of a resolver rotor according to the aspect of this disclosure resides in that the cylindrical member includes an alignment portion against which an end portion of the resolver rotor abuts.

According to this configuration, a press-fitting operation of the resolver rotor to the cylindrical member is facilitated. In addition, a fixed posture of the resolver rotor with respect to the cylindrical member is stabilized by pushing the resolver rotor to the alignment portion to abut against there.

Another feature of the fixing structure of a resolver rotor according to the aspect of this disclosure resides in that the cylindrical member includes a separation portion that is separated from the rotation shaft in a position corresponding to a radially inner side of the second abutting portion, the cylindrical member further includes a tapered portion connecting between the first abutting portion and the separation portion, and when viewed in a direction orthogonal to an axial direction of the rotation shaft, a portion in a boundary position between the separation portion and the tapered portion has a rounded shape.

As in this configuration, in a case where the cylindrical member includes the separation portion separated from the rotation shaft in the position corresponding to the radially inner side of the second abutting portion abutting against the inner peripheral surface of the resolver rotor, the separation portion is reduced in diameter to some extent on the side of the rotation shaft. That is, when viewed in a direction orthogonal to the axial direction of the rotation shaft, the separation portion receives bending deformation on the side of the rotation shaft in the boundary position between the separation portion and the tapered portion. As a result, a compression stress is generated in the boundary position between the separation portion and the tapered portion on the inner peripheral surface of the cylindrical member. Therefore, as in the configuration, a portion in the boundary position has the rounded shape and thereby concentration of the compression stress is avoided and the strength of the cylindrical member is improved. Therefore, it is possible to increase the press-fit strength of the resolver rotor with respect to the cylindrical member and it is possible to reliably fix the resolver rotor.

Another feature of the fixing structure of a resolver rotor according to the aspect of this disclosure resides in that the resolver rotor is one of a plurality of resolver rotors, a first resolver rotor is provided on one end side of the cylindrical member along the longitudinal direction of the rotation shaft, and a second resolver rotor is provided on the other end side of the cylindrical member.

As in this configuration, it is possible to accurately measure the rotation angle of the rotation shaft by providing two resolver rotors. In addition, the cylindrical member is fixed to the rotation shaft at a center position of the cylindrical member along the axial direction by providing each resolver rotor on both end portions of the cylindrical member. Therefore, a press-fit state of the cylindrical member with respect to the rotation shaft is stabilized and strengthened, and it is possible to further reliably fix the two resolver rotors.

Another feature of the fixing structure of a resolver rotor according to the aspect of this disclosure resides in that the first resolver rotor and the second resolver rotor include claw portions intermittently abut against the cylindrical member along a circumferential direction of the rotation shaft, and are configured to have the same shape as each other, and the first resolver rotor and the second resolver rotor are disposed such that the claw portion of the first resolver rotor and the claw portion of the second resolver rotor are provided in different positions along the circumferential direction of the rotation shaft when viewed in the longitudinal direction of the rotation shaft.

In the case of this configuration, the claw portions of the first resolver rotor and the claw portions of the second resolver rotor are disposed in different positions in the circumferential direction of the rotation shaft. Portions of the cylindrical member receiving compression deformation due to the claw portions of each resolver rotor are disposed in different phases in each end portion of the cylindrical member. As a result, in the cylindrical member, a portion which is compressed by the claw portions of the first resolver rotor and a portion which is compressed by the claw portions of the second resolver rotor can be separated farthest from each other. That is, in the cylindrical member, a region, to which a pressing force is applied by the claw portions of the two resolver rotors in a superimposed manner, is reduced. As a result, in the cylindrical member, it is possible to prevent occurrence of locally excessive stress and it is possible to further stabilize the fixed state of the resolver rotors.

A feature of a fixing structure of a rotation body for a motor according to still another aspect of this disclosure resides in that the fixing structure of a rotation body for a motor includes a rotation shaft; a plurality of rotation bodies that are inserted to an outer peripheral surface of the rotation shaft from the same side; and a stator that faces the rotation body from a radially outer side, in which each of the rotation bodies includes a plurality of claw portions which intermittently abut against the rotation shaft along a circumferential direction of the rotation shaft, and when viewed in a longitudinal direction of the rotation shaft, each of the rotation bodies is fixed to the rotation shaft such that a part of regions, in which claw portions of the rotation body inserted to the rotation shaft later abut against an outer peripheral surface of the rotation shaft, is disposed in a position different from regions in which the claw portions of the rotation body that are firstly inserted abuts against the outer peripheral surface of the rotation shaft.

This configuration is not limited to the fixing structure of a resolver rotor with respect to the rotation shaft and can be applied to the mounting of a rotation body such as a rotor configuring a motor. According to this configuration, a part of the claw portions of the rotation body inserted to the rotation shaft later can abut against a portion against which the claw portions of the rotation body inserted firstly do not abut in the outer peripheral surface of the rotation shaft. Therefore, the claw portions of the rotation body inserted later can generate a predetermined abutting force to the outer peripheral surface of the rotation shaft and it is possible to reliably fix all the plurality of rotation bodies to the rotation shaft.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a sectional view illustrating a configuration of a motor device of a first embodiment;
Fig. 2 is a perspective view illustrating a fixing structure of a resolver rotor of the first embodiment;
Fig. 3 is a plan view illustrating the fixing structure of the resolver rotor of the first embodiment;
Fig. 4 is a plan view of the resolver rotor of the first embodiment;
Fig. 5 is a sectional view illustrating the fixing structure of the resolver rotor of the first embodiment;
Fig. 6 is a perspective view illustrating a fixing structure of a resolver rotor of another embodiment;
Fig. 7 is a plan view illustrating the fixing structure of the resolver rotor of another embodiment;
Fig. 8 is a view illustrating a claw portion of anther embodiment;
Fig. 9 is a view illustrating the claw portion of anther embodiment;
Fig. 10 is a view of an entire configuration of a motor of a second embodiment;
Fig. 11 is a perspective view illustrating a cylindrical member and a shaft before being press-fitted of the second embodiment;
Fig. 12 is a plan view of a resolver rotor of the second embodiment;
Fig. 13 is a perspective view illustrating a fixing structure of the resolver rotor of the second embodiment;
Fig. 14 is a sectional view illustrating the fixing structure of the resolver rotor of the second embodiment;
Fig. 15 is an enlarged view of a main portion of a cylindrical member of the second embodiment;
Fig. 16 is a view of an entire configuration of a motor of a third embodiment;
Fig. 17 is a perspective view illustrating a fixing structure of a resolver rotor of the third embodiment;
Fig. 18 is a sectional view illustrating the fixing structure of the resolver rotor of the third embodiment;
Fig. 19 is a partial sectional view illustrating the fixing structure of the resolver rotor of the third embodiment;
Fig. 20 is a sectional view illustrating a cylindrical member of another embodiment;
Fig. 21 is a sectional plan view illustrating a fixing structure of a resolver rotor of anther embodiment;
Fig. 22 is a sectional view illustrating a cylindrical member of anther embodiment; and
Fig. 23 is a sectional view illustrating the cylindrical member of anther embodiment.

### DETAILED DESCRIPTION

Hereinafter, embodiments of this disclosure will be described with reference to the drawings.

### First Embodiment

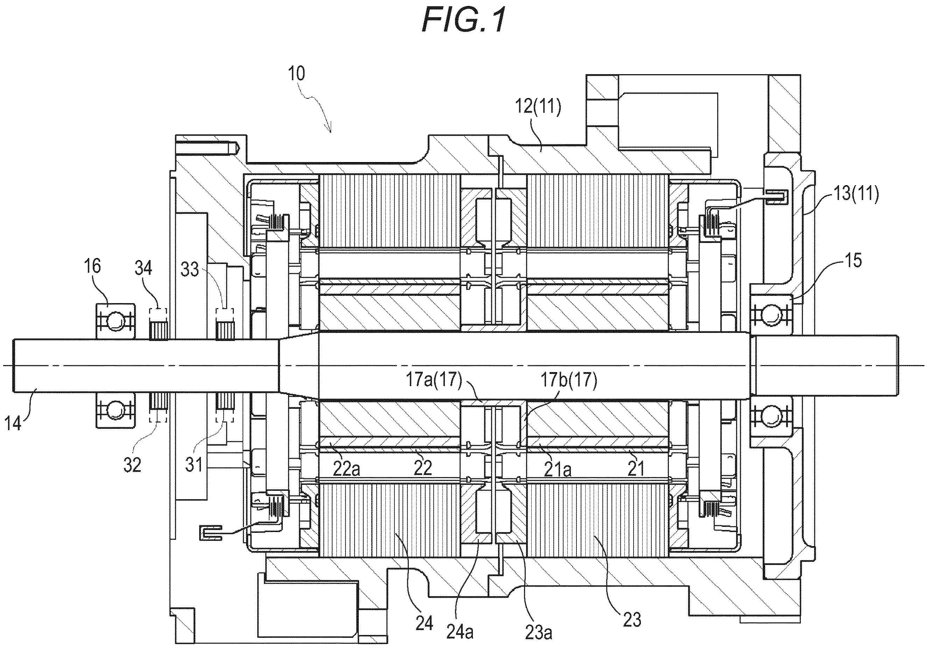

An example of an embodiment of a fixing structure of a resolver rotor according to this disclosure will be described with reference to Figs. 1 to 5. A rotary electric machine 10 illustrated in Fig. 1 is used, for example, as a motor for an automobile. A case 11 of the rotary electric machine 10 includes a frame 12 and a bracket 13. In a shaft 14 (an example of a rotation shaft) that is an output shaft of the rotary electric machine 10, one end side is held in a bearing 15 fixed to an inner peripheral side of the bracket 13 and the other end side is held in a bearing 16 disposed on an outside of the case 11.

Two motor rotors 21 and 22 are fixed to the shaft 14 via a spacer 17. The spacer 17 is configured of a cylindrical portion 17a abutting against the shaft 14 and a flange portion 17b. Motor stators 23 and 24 are respectively fixed to the inner peripheral side of the frame 12 so as to surround an outer periphery of the motor rotors 21 and 22. Exciting coils 23a and 24a are respectively wound around the motor stators 23 and 24. Permanent magnets 21 a and 22a are respectively disposed in the motor rotors 21 and 22 in a circumferential direction. When an alternating current is supplied to the exciting coils 23a and 24a, a rotating magnetic field is generated in the motor stators 23 and 24 and the motor rotors 21 and 22 are rotated by receiving an influence of the rotating magnetic field.

A plurality of resolver rotors 31 and 32 (two in the embodiment) are fixed between the motor rotor 21 and the bearing 16 in the shaft 14. Resolver stators 33 and 34 are disposed on the outer peripheral side of the resolver rotors 31 and 32. The resolver stators 33 and 34 are fixed to, for example, a base (not illustrated) separately provided on the inner peripheral side of the case 11. An exciting coil and a detecting coil (not illustrated) are respectively wound around the resolver stators 33 and 34. Rotation angles of the resolver rotors 31 and 32 are detected by exciting the exciting coil and obtaining an output signal from the detecting coil. The resolver rotors 31 and 32 are rotated in synchronization with the motor rotors 21 and 22. Therefore, the rotation angle of the motor rotors 21 and 22 can be detected by the resolver rotors 31 and 32.

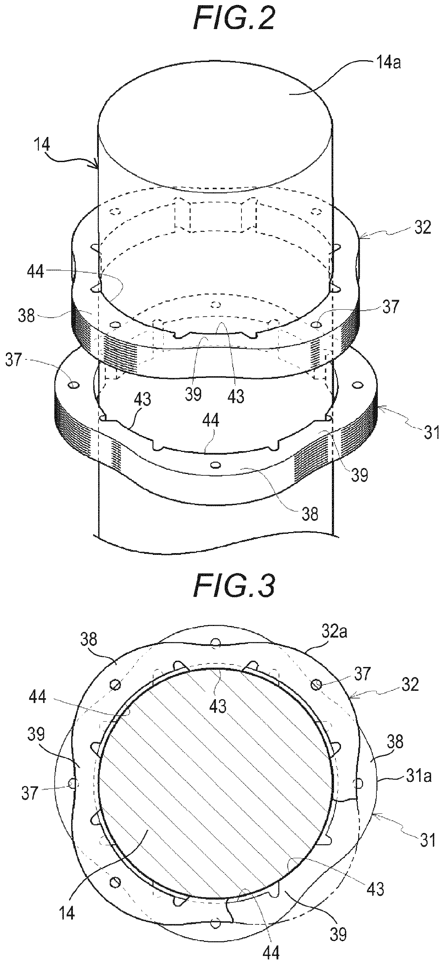

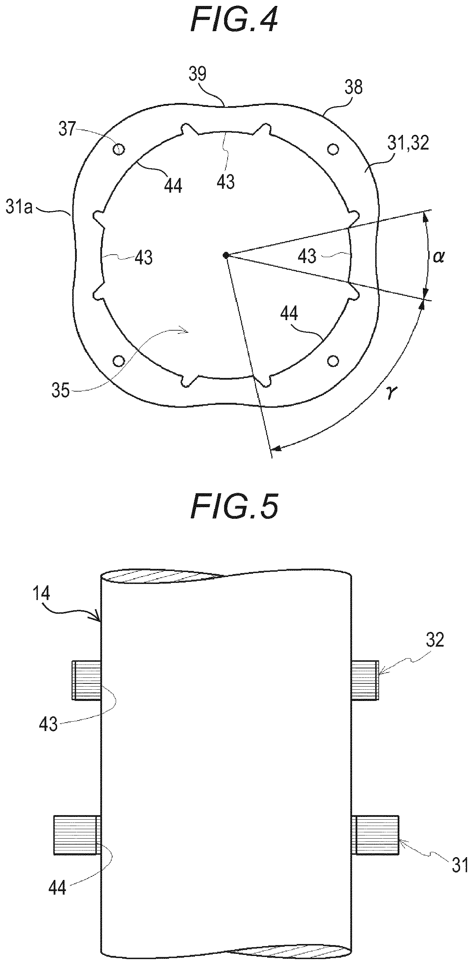

As illustrated in Fig. 2, the resolver rotors 31 and 32 are inserted and fixed to an outer peripheral surface of the shaft 14 from the same side. The resolver rotors 31 and 32 are configured by laminating a plurality of steel plates having the same shape and have holes 35 inserted to the shaft 14 at a center portion (Fig. 4). A plurality of alignment dowels 37 are provided in each of the steel plates configuring the resolver rotors 31 and 32.

As illustrated in Fig. 3, a mountain portion 38 and a valley portion 39 formed with gentle curves are alternately provided on an outer peripheral surface 31a (32a) of the resolver rotor 31 (32) with a phase difference of 45 degrees. The mountain portion 38 has a shape gradually protruding outward in a radial direction and the valley portion 39 has a shape gradually retracted inward in the radial direction.

The outer peripheral surface 31a (32a) of the resolver rotor 31 (32) faces the resolver stator 33 (34) and configures an outside detection surface for detecting the rotation angle. The outer peripheral surfaces 31 a and 32a of the resolver rotors 31 and 32 face the resolver stators 33 and 34, and configure the outside detection surfaces for detecting the rotation angle. In the first resolver rotor 31 and the second resolver rotor 32, phases of the mountain portion 38 and the valley portion 39 are also shifted by 45 degrees caused by the phases of claw portions 43. Therefore, a period of the rotation angle measured by the first resolver rotor 31 and the second resolver rotor 32 is shifted. As a result, since a displacement width of an output value is not too large and can be within an appropriate range, it is possible to improve detection accuracy of the rotation angle.

The resolver rotors 31 and 32 include a plurality of claw portions 43 (four in Fig. 3) intermittently abutting against the shaft 14 in the circumferential direction of the shaft 14. The claw portion 43 has an arc shape along the circumferential direction and has recessed portions 44 that are retracted outward in the radial direction on both sides in the circumferential direction. The claw portion 43 is not provided on an radially inner side of the mountain portion 38 but is provided in a position corresponding to the radially inner side of the valley portion 39. In the resolver rotors 31 and 32, the mountain portions 38 in the outer peripheral portion are portions contributing to measurement of the rotational position of the shaft 14.

In a case where the resolver rotors 31 and 32 are fixed to the shaft 14, as the claw portions 43 of the resolver rotors 31 and 32 are enlarged in diameter and deformed, a portion of the claw portion 43 outward in the radial direction is to some extent enlarged in diameter and deformed. Therefore, in the resolver rotors 31 and 32, the mountain portions 38 contributing to measurement of the rotational position are disposed with different phases from the claw portion 43 and an influence of deformation according to the mounting of the resolver rotors 31 and 32 on the shaft 14 is reduced.

As illustrated in Fig. 3, in an inner peripheral edge of the resolver rotors 31 and 32, a length of the claw portion 43 extending in the circumferential direction extends in the circumferential direction and is set shorter than a length of the recessed portion 44 between the adjacent claw portions 43. That is, an angle α occupied by the claw portion 43 in the circumferential direction is smaller than an angle γ occupied by the recessed portion 44 adjacent to the claw portion 43 in the circumferential direction.

Therefore, when mounting the plurality of resolver rotors 31 and 32 on the shaft 14, the claw portions 43 of both the resolver rotors 31 and 32 can be different phases along the circumferential direction. Particularly, as the length of the claw portion 43 extending in the circumferential direction is shorter than the length of the recessed portion 44 extending in the circumferential direction, a setting range of the relative phase, in which the phases of the claw portions 43 of the resolver rotors 31 and 32 adjacent are different along the longitudinal direction of the shaft 14, is widened.

As illustrated in Figs. 2, 3, and 5, the claw portions 43 are press-fitted to the outer peripheral surface of the shaft 14 and thereby the resolver rotors 31 and 32 are fixed to the shaft 14. On the other hand, the recessed portions 44 positioned on an inside of the mountain portions 38 are not press-fitted to the outer peripheral surface of the shaft 14 and a gap is formed between the recessed portion 44 and the outer peripheral surface of the shaft 14. In the shaft 14, portions against which the resolver rotors 31 and 32 abut in the circumferential direction of the outer peripheral surface are limited to the positions of the claw portions 43.

As illustrated in Fig. 2, the first resolver rotor 31 is inserted to the shaft 14 firstly and the second resolver rotor 32 is inserted. When viewed in the longitudinal direction of the shaft 14, each of the resolver rotors 31 and 32 is fixed to the shaft 14 such that at least a part of regions, in which the claw portions 43 of the second resolver rotor 32 inserted to the shaft 14 later abut against the outer peripheral surface of the shaft 14, is disposed in a position different from regions in which the claw portions 43 of the first resolver rotor 31 inserted firstly abut against the outer peripheral surface of the shaft 14.

Therefore, a part of the claw portions 43 of the second resolver rotor 32 inserted to the shaft 14 later can abut against the portion against which the resolver rotor 31 does not abut firstly in the outer peripheral surface of the shaft 14, and it is possible to generate a predetermined abutting force with respect to the outer peripheral surface of the shaft 14. Therefore, it is possible to reliably fix all the plurality of resolver rotors 31 and 32 to the shaft 14.

In the example illustrated in Figs. 2 and 3, the claw portions 43 included in each of the plurality of resolver rotors 31 and 32 are provided in different positions, that is, positions not overlapped when viewed in the longitudinal direction of the shaft 14. Therefore, all the claw portions 43 of the plurality of resolver rotors 31 and 32 abut against new surfaces against which other claw portions 43 do not abut in the outer peripheral surface of the shaft 14. Therefore, all the resolver rotors 31 and 32 are further reliably fixed to the shaft 14.

### Second Embodiment

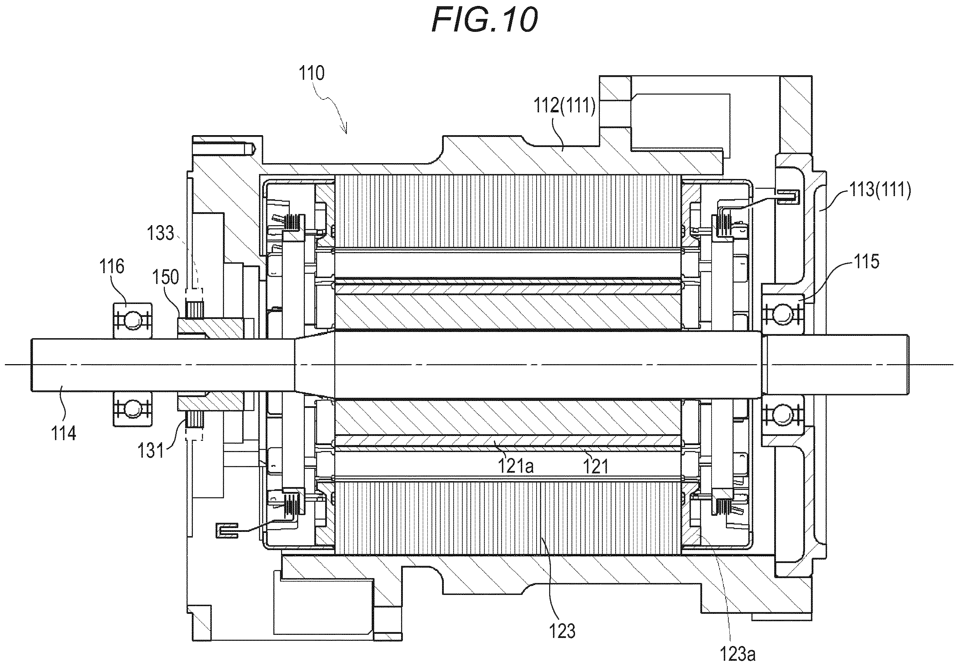

Figs. 10 to 14 illustrate an example of an embodiment of a fixing structure of a resolver rotor according to this disclosure. A rotary electric machine 110 illustrated in Fig. 10 is used, for example, as a motor for an automobile. A case 111 of the rotary electric machine 110 includes a frame 112 and a bracket 113. In a shaft 114 (an example of a rotation shaft) that is an output shaft of the rotary electric machine 110, one end is held in a bearing 115 fixed to an inner peripheral side of the bracket 113 and the other end is held in a bearing 116 disposed on an outside of the case 111.

A motor rotor 121 is fixed to the shaft 114. Motor stators 123 are respectively fixed to an inner peripheral side of the frame 112 so as to surround an outer periphery of the motor rotor 121. Exciting coil 123a is wound around the motor stator 123. A permanent magnet 121a is disposed in the motor rotor 121 in a circumferential direction. When an alternating current is supplied to the exciting coil 123a, a rotating magnetic field is generated in the motor stator 123 and the motor rotor 121 is rotated by receiving an influence of the rotating magnetic field.

A resolver rotor 131 is provided on an outside of the shaft 114 in a radial direction and a cylindrical member 150 is provided between the shaft 114 and the resolver rotor 131. A resolver stator 133 is disposed on the outer peripheral side of the resolver rotor 131. The resolver stator 133 is fixed to a base (not illustrated) separately provided on the inner peripheral side of the case 111. An exciting coil and a detecting coil (not illustrated) are respectively wound around the resolver stator 133. A rotation angle of the resolver rotor 131 is detected by exciting the exciting coil and obtaining an output signal from the detecting coil. The resolver rotor 131 is rotated in synchronization with the motor rotor 121. Therefore, the rotation angle of the motor rotor 121 can be detected by the resolver rotor 131.

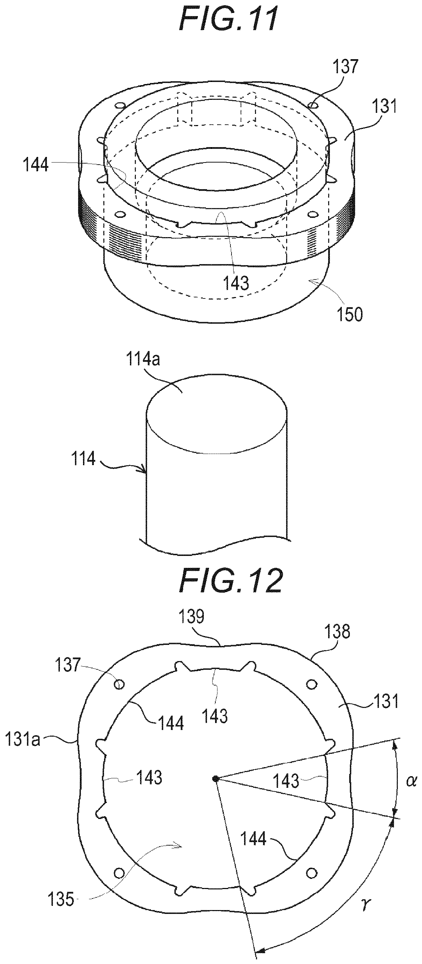

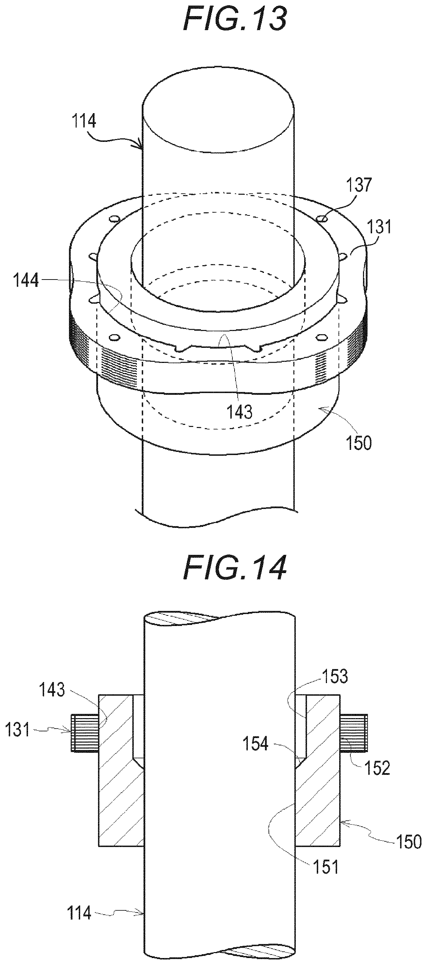

As illustrated in Figs. 11 and 13, the cylindrical member 150 provided between the shaft 114 and the resolver rotor 131 is provided and the resolver rotor 131 is fixed to a predetermined position by being press-fitted from one end side of the cylindrical member 150. The resolver rotor 131 is configured by laminating a plurality of steel plates having the same shape and has a hole 135 inserted to the cylindrical member 150 at a center portion (Fig. 12). The cylindrical member 150 has a first abutting portion 151 abutting against the inner surface by being press-fitted to the outer peripheral surface of the shaft 114 and a second abutting portion 152 abutting against the inner peripheral surface of the resolver rotor 131 on the outer surface. The cylindrical member 150 has an inner diameter greater than an inner diameter of the first abutting portion 151 in a position corresponding to a radially inner side of the second abutting portion 152 and is provided with a separation portion 153 separated from the shaft 114. A plurality of alignment dowels 137 are provided in each of the steel plates configuring the resolver rotor 131.

As illustrated in Fig. 12, a mountain portion 138 and a valley portion 139 formed with gentle curves are alternately provided on an outer peripheral surface 131 a of the resolver rotor 131 with a phase difference of 45 degrees. The mountain portion 138 has a shape gradually protruding outward in a radial direction and the valley portion 139 has a shape gradually retracted inward in the radial direction. The outer peripheral surface 131a of the resolver rotor 131 faces the resolver stator 133 and configures an outside detection surface for detecting the rotation angle.

The resolver rotor 131 includes a plurality of claw portions 143 (four in Fig. 12) intermittently abutting against the shaft 114 in the circumferential direction of the shaft 114. The claw portion 143 has recessed portions 144 that are recessed outward in the radial direction on both sides in the circumferential direction. The claw portion 143 is provided in a position corresponding to the radially inner side of the valley portion 139 and is formed in an arc shape.

As illustrated in Fig. 12, in an inner peripheral edge of the resolver rotor 131, a length of the claw portion 143 extending in the circumferential direction extends in the circumferential direction and is set shorter than a length of the recessed portion 144 between the adjacent claw portions 143. That is, an angle α occupied by the claw portion 143 in the circumferential direction is smaller than an angle γ occupied by the recessed portion 144 adjacent to the claw portion 143 in the circumferential direction.

Therefore, when mounting the plurality of resolver rotors 131 and 132 on the shaft 114, the claw portions 143 of both the resolver rotors 131 and 132 can be different phases along the circumferential direction. Particularly, as the length of the claw portion 143 extending in the circumferential direction is shorter than the length of the recessed portion 144 extending in the circumferential direction, a setting range of the relative phase, in which the phases of the claw portions 143 of the resolver rotors 131 and 132 adjacent are different along the longitudinal direction of the shaft 114, is widened.

As illustrated in Figs. 11 and 13, the claw portions 143 are press-fitted to the outer peripheral surface of the cylindrical member 150 and thereby the resolver rotor 131 is fixed to the cylindrical member 150. On the other hand, the recessed portions 144 other than the claw portions 143 are not press-fitted to the outer peripheral surface of the cylindrical member 150 and a gap is formed between an inner peripheral surface 145 and the outer peripheral surface of the cylindrical member 150.

As illustrated in Figs. 11, 13, and 14, the cylindrical member 150 integrated with the resolver rotor 131 is press-fitted to the shaft 114 to be fixed. In this case, the first abutting portion 151 abutting against the outer peripheral surface of the shaft 114 and the second abutting portion 152 abutting against the claw portion 143 (inner peripheral surface) of the resolver rotor 131 are provided in different positions in the longitudinal direction of the shaft 114.

According to the configuration, when the cylindrical member 150 is press-fitted to the shaft 114, even if the first abutting portion 151 of the cylindrical member 150 is enlarged in diameter, an enlarged diameter amount in the second abutting portion 152 against which the resolver rotor 131 abuts is reduced. Therefore, a press-fit degree of the resolver rotor 131 with respect to the cylindrical member 150 is stabilized and it is possible to reliably fix the resolver rotor 131 to the cylindrical member 150.

In the embodiment, in the inner surface of the cylindrical member 150, the first abutting portion 151 abuts against the shaft 114 and the separation portion 153 that is a portion other than the first abutting portion 151 does not abut against the shaft 114. That is, all the first abutting portion 151 and the second abutting portion 152 are set in a state of not being overlapped when viewed in a direction orthogonal to the shaft 114. Therefore, it is difficult to influence the enlarged diameter on the outer periphery side of the first abutting portion 151 in the cylindrical member 150 due to the resolver rotor 131 that is fixed to the second abutting portion 152.

Here, in the cylindrical member 150, the positions, which are different from each other in the longitudinal direction of the shaft 114, of the first abutting portion 151 and the second abutting portion 152 include positions in which the first abutting portion 151 and the second abutting portion 152 are partially overlapped when viewed in a direction orthogonal to the shaft 114.

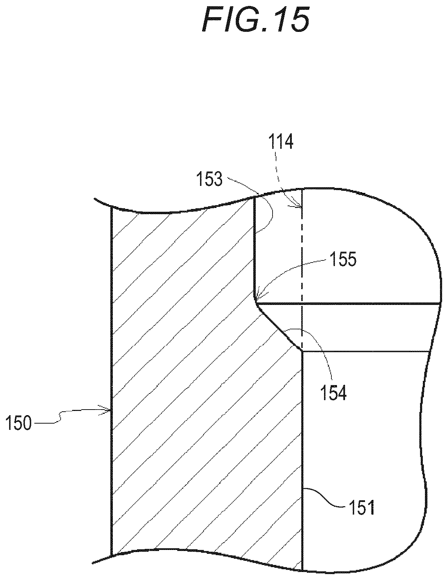

As illustrated in Fig. 15, the cylindrical member 150 further includes a tapered portion 154 connecting between the first abutting portion 151 and the separation portion 153 in the longitudinal direction of the shaft 114 on the inner peripheral surface. A portion 155 in a boundary position between the separation portion 153 and the tapered portion 154 is configured to be a rounded shape when viewed in a direction orthogonal to the axial direction of the shaft 114.

In a case where a radially inner side of the second abutting portion 152 abutting against the resolver rotor 131 is separated from the shaft 114 in the cylindrical member 150, the separation portion 153 is reduced in diameter to the side of the shaft 114 to some extent. That is, the separation portion 153 receives a bending deformation on the side of the shaft 114 in the boundary position with the tapered portion 154 when viewed in the direction orthogonal to the axial direction of the shaft 114. As a result, a compression stress is generated in the boundary position between the separation portion 153 and the tapered portion 154 in the inner peripheral surface of the cylindrical member 150. Therefore, concentration of the compression stress is avoided and the strength of the cylindrical member 150 is improved by causing the portion 155 in the boundary position to be the rounded shape.

### Third Embodiment

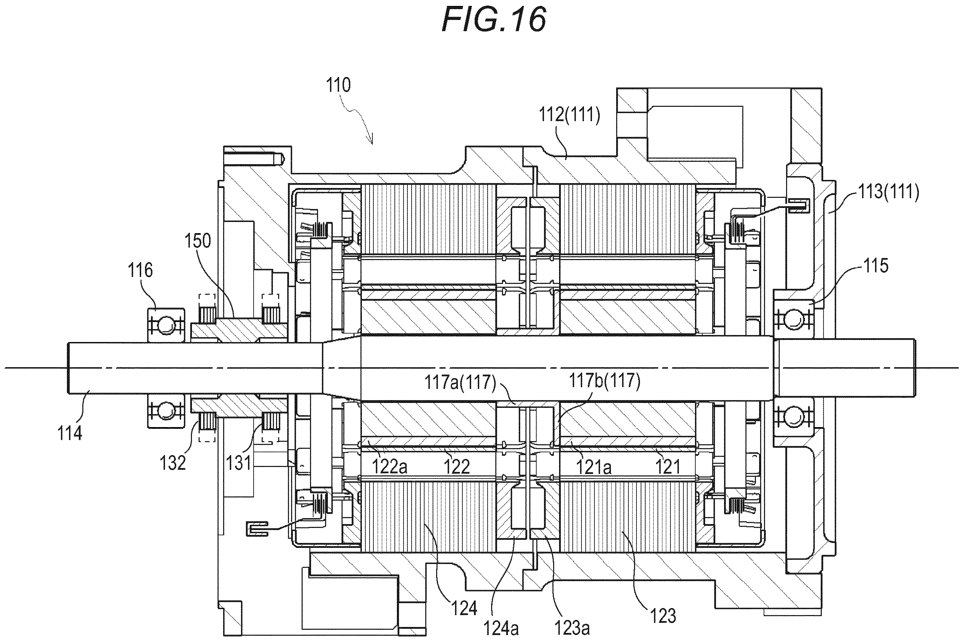

A third embodiment is illustrated in Figs. 16 to 19. In the embodiment, as illustrated in Fig. 16, two motor rotors 121 and 122 are fixed to the shaft 114 via a spacer 117. The spacer 117 is configured of a cylindrical portion 117a abutting against the shaft 114 and a flange portion 117b. Motor stators 123 and 124 are respectively fixed to the inner peripheral side of the frame 112 so as to surround an outer periphery of the motor rotors 121 and 122. Exciting coils 123a and 124a are respectively wound around the motor stators 123 and 124. Permanent magnets 121a and 122a are respectively disposed in the motor rotors 121 and 122 in a circumferential direction.

A plurality of resolver rotor 131 and 132 (two in the embodiment) are fixed to the cylindrical member 150 between the motor rotor 121 and a bearing 116 in the shaft 114. Resolver stators 133 and 134 are disposed on the outer peripheral side of the resolver rotors 131 and 132. The resolver stators 133 and 134 are fixed to, for example, a base (not illustrated) separately provided on the inner peripheral side of a case 111. An exciting coil and a detecting coil (not illustrated) are respectively wound around the resolver stators 133 and 134.

In the resolver rotors 131 and 132, the first resolver rotor 131 is provided on one end side of the cylindrical member 150, and the second resolver rotor 132 is provided on the other end side of the cylindrical member 150 along the longitudinal direction of the shaft 114. The resolver rotors 131 and 132 are fixed to predetermined positions by being respectively press-fitted from both ends of the cylindrical member 150. Both the first resolver rotor 131 and the second resolver rotor 132 have a shape illustrated in Fig. 12 and have the same shape.

The cylindrical member 150 has the first abutting portion 151 abutting against an inner peripheral surface by being press-fitted to the outer peripheral surface of the shaft 114 and the second abutting portion 152 abutting against the inner peripheral surfaces of the resolver rotors 131 and 132 on the outer peripheral surface. The first abutting portion 151 is disposed closer to a center in the axial direction on the inner surface of the cylindrical member 150 and the second abutting portion 152 is disposed on the both end sides in the axial direction on the outer surface of the cylindrical member 150.

Two resolver rotors 131 and 132 are provided in the shaft 114 and thereby it is possible to further accurately measure a rotation angle of the shaft 114. In addition, the resolver rotors 131 and 132 are respectively provided on the both end portions of the cylindrical member 150 and thereby the cylindrical member 150 is fixed to the shaft 114 in the center position along the axial direction of the cylindrical member 150. Therefore, a press-fit state of the cylindrical member 150 with respect to the shaft 114 becomes stable and strong, and it is possible to further reliably fix the two resolver rotors 131 and 132.

The first resolver rotor 131 and the second resolver rotor 132 are disposed such that the claw portions 143 of the first resolver rotor 131 and the claw portions 143 of the second resolver rotor 132 are positioned in different positions with respect to the cylindrical member 150 along the circumferential direction of the shaft when viewed in the longitudinal direction of the shaft 114. In the embodiment, the phases of the claw portions 143 in the first resolver rotor 131 and the second resolver rotor 132 are shifted by 45 degrees.

Therefore, in the cylindrical member 150, a portion which is compressed by the claw portions 143 of the first resolver rotor 131 and a portion which is compressed by the claw portions 143 of the second resolver rotor 132 can be separated farthest from each other. That is, in the cylindrical member 150, a region, to which a pressing force is applied by the claw portions 143 of the two resolver rotors 131 and 132 in a superimposed manner, is reduced. As a result, in the cylindrical member 150, it is possible to prevent occurrence of locally excessive stress and it is possible to further stabilize the fixed state of the resolver rotors 131 and 132.

The outer peripheral surfaces 131 a and 132a of the resolver rotors 131 and 132 face the resolver stators 133 and 134, and configure the outside detection surfaces for detecting the rotation angle. In the first resolver rotor 131 and the second resolver rotor 132, phases of the mountain portion 138 and the valley portion 139 are also shifted by 45 degrees caused by the phases of the claw portions 143. Therefore, a period of the rotation angle measured by the first resolver rotor 131 and the second resolver rotor 132 is shifted. As a result, since a displacement width of an output value is not too large and can be within an appropriate range, it is possible to improve detection accuracy of the rotation angle.

The claw portions 143 are press-fitted to the outer peripheral surface of the cylindrical member 150 and thereby the resolver rotors 131 and 132 are inserted to the cylindrical member 150 to be fixed. On the other hand, the recessed portions 144 on the inside of the mountain portion 138 are not press-fitted to the outer peripheral surface of the cylindrical member 150 and a gap is formed between the recessed portion 144 and the outer peripheral surface of the cylindrical member 150.

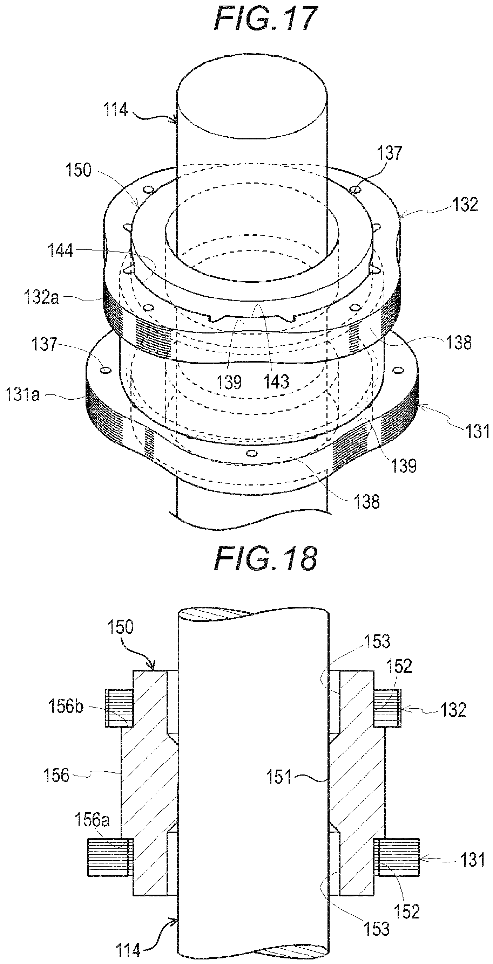

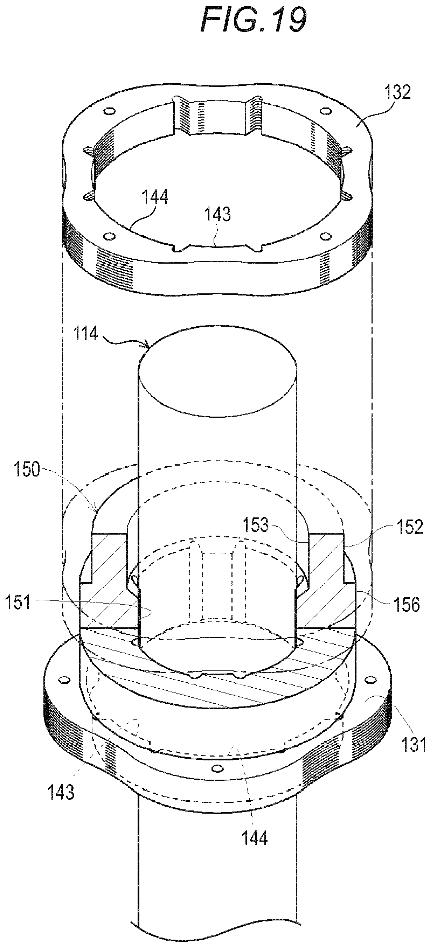

As illustrated in Figs. 18 and 19, the cylindrical member 150 includes an alignment portion 156 in which end portions of the resolver rotors 131 and 132 abut against the outer peripheral surface. The alignment portion 156 is configured of a large diameter portion 156 provided closer to a center in the axial direction on the outer peripheral surface of the cylindrical member 150. The resolver rotors 131 and 132 are press-fitted from the both end sides of the cylindrical member 150 and end portions thereof are respectively abut against end surfaces 156a and 156b of the large diameter portion 156 to be aligned. Therefore, the press-fitting operation of the resolver rotors with respect to the cylindrical member 150 is facilitated. In addition, the resolver rotors 131 and 132 abut against the end surfaces 156a and 156b of the alignment portion 156 and thereby fixed postures of the resolver rotors 131 and 132 with respect to the cylindrical member 150 are also stabilized.

### Other Embodiments

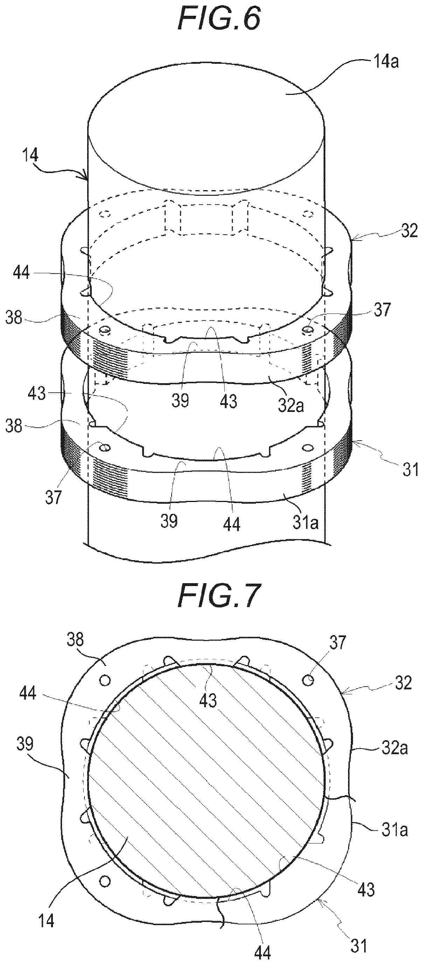

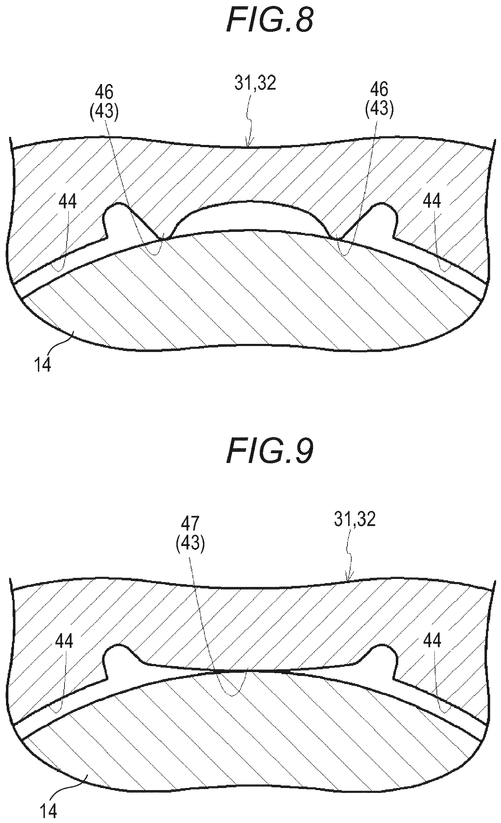

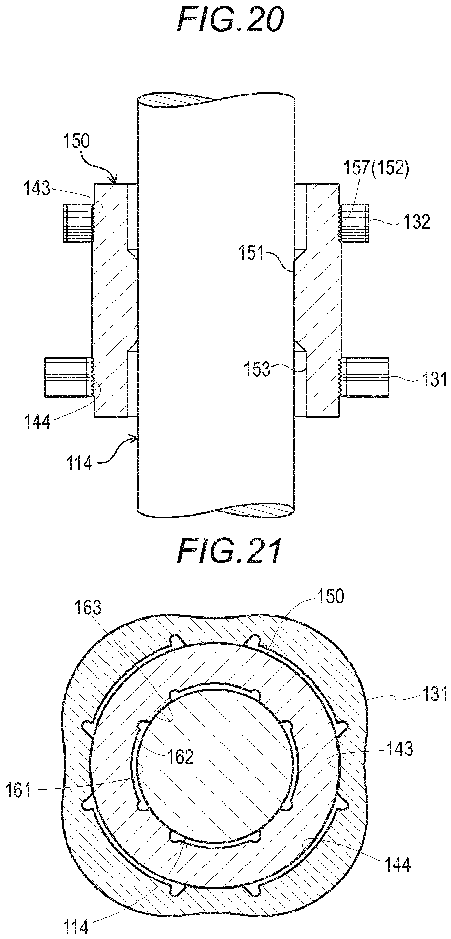

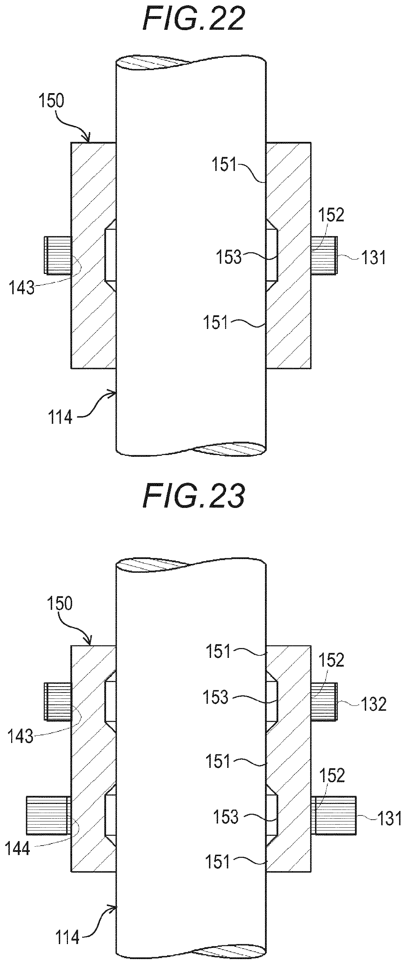

(1) In the first embodiment, an example in which the resolver stators 33 and 34 are disposed on the outer periphery side of the resolver rotors 31 and 32 is illustrated, but instead of the resolver stators 33 and 34, the resolver rotors 31 and 32 may be configured by providing another rotation angle sensor on the outer periphery side.
(2) In the first embodiment, an example in which the first resolver rotor 31 and the second resolver rotor 32 have the same shape is illustrated, but the positions of the claw portions 43 may be different in the first resolver rotor 31 and the second resolver rotor 32. In the embodiment, as illustrated in Figs. 6 and 7, the first resolver rotor 31 is provided with the claw portions 43 on the radially inner side of the mountain portions 38 and the second resolver rotor 32 is provided with the claw portions 43 on the radially inner side of the valley portions 39.
   As described above, the claw portions 43 of the first resolver rotor 31 and the claw portions 43 of the second resolver rotor 32 are provided in different positions in advance. Therefore, as illustrated in Figs. 6 and 7, it is possible to fix the resolver rotors 31 and 32 to the shaft 14 in a state where the outer peripheral surface 31 a of the first resolver rotor 31 and the outer peripheral surface 32a of the second resolver rotor 32 are aligned along the longitudinal direction of the shaft 14.
(3) In the first embodiment, an example in which four claw portions 43 are provided in each of the resolver rotors 31 and 32 is illustrated, but the number of the claw portions 43 may be three or may be five or more. In addition, in the embodiment described above, an example in which the claw portion 43 is formed in the arc shape is illustrated, but the shape of the claw portion 43 is not particularly limited. For example, as illustrated in Fig. 8, the claw portion 43 may be configured of two projection portions 46 or as illustrated in Fig. 9, a center portion 47 in the circumferential direction projects inward in the radial direction and thereby the claw portion 43 may abut against the shaft 14.
(4) In the first embodiment, an example in which two resolver rotors 31 and 32 are fixed to the shaft 14 is illustrated, but the number of the resolver rotors fixed to the shaft 14 may be three or more.
(5) In the first embodiment, a structure in which the plurality of resolver rotors 31 and 32 are fixed to the shaft 14 is illustrated as an example, but a structure in which a rotation body for a motor is fixed to the shaft 14 may be provided. In the configuration described above, for example, a structure for fixing the plurality of motor rotors 21 and 22 (an example of the rotation body) illustrated in Fig. 1 are fixed to the shaft 14 may be realized by the following configuration.
   Each of the motor rotors 21 and 22 includes a plurality of claw portions (not illustrated) intermittently abutting against the shaft 14 along the circumferential direction of the shaft 14. When viewed in the direction along the longitudinal direction of the shaft 14, each of the motor rotors 21 and 22 is fixed to the shaft 14 such that a part of the region, in which the claw portions of the motor rotor 22 inserted to the shaft 14 later abut against the outer peripheral surface of the shaft 14, is disposed in the position different from the regions in which the claw portions of the motor rotor 21 inserted to the rotation shaft firstly abut against the outer peripheral surface of the shaft 14.
(6) The large diameter portion 156 may be provided in the cylindrical member 150 of the second embodiment as the alignment portion of the resolver rotor 131. As illustrated in Fig. 20, the alignment portions of the resolver rotors 131 and 132 may be configured by providing uneven portions 157 on the outer peripheral surface of the cylindrical member 150. The uneven portions 157 are formed to increase a friction force between the cylindrical member 150 and the claw portions 143 of the resolver rotors 131 and 132. The uneven portions 157 may be provided through an entire circumference in the outer peripheral surface of the cylindrical member 150 or may be distributed in positions corresponding to the positions of the claw portions 143 of the resolver rotors 131 and 132 in the circumferential direction.
(7) In the second embodiment, a configuration in which the inner peripheral surface of the cylindrical member 150 is press-fitted to the shaft 114 through the entire circumference is illustrated, but as illustrated in Fig. 21, similar to the claw portions 143 of the resolver rotor 131, claw portions 163 intermittently abutting against the shaft 114 in the circumferential direction may be included in an inner peripheral surface 161 of the cylindrical member 150. The claw portion 163 has recessed portions 162 on both sides in the radial direction. The claw portions 143 of the resolver rotor 131 and the claw portions 163 of the cylindrical member 150 are disposed in different positions, that is, positions that are not overlapped in the radial direction of the shaft 114 in Fig. 21. Therefore, in the cylindrical member 150, even if the first abutting portion 151 (claw portion 163) and the second abutting portion 152 against which the claw portions 143 of the resolver rotor 131 abut are positioned in the same position in the longitudinal direction of the shaft 114, the enlarged diameter of the cylindrical member 150 is unlikely to influence to the resolver rotor 131.
(8) As illustrated in Fig. 22, in the cylindrical member 150 including one resolver rotor 131 on the outer periphery, the first abutting portion 151 may be provided in a position in which the second abutting portion 152 is caught in the longitudinal direction of the shaft 114. In addition, as illustrated in Fig. 23, in the cylindrical member 150 including two resolver rotors 131 and 132 on the outer periphery, the first abutting portion 151 may be provided in a position in which two second abutting portions 152 are caught in the longitudinal direction of the shaft 114. Therefore, since the second abutting portions 152 are supported on portions on both sides by the first abutting portion 151, the postures of the resolver rotors 131 and 132 abutting against the second abutting portion 152 are stabilized. In addition, even if the second abutting portion 152 of the cylindrical member 150 is reduced in diameter by receiving a pressing force from the resolver rotors 131 and 132, the outer peripheral surface corresponding to the first abutting portion 151 is not reduced in diameter. That is, in the cylindrical member 150, since the outer diameter in the portions of both sides of the second abutting portion 152 is greater than the outer diameter of the second abutting portion 152, in the resolver rotors 131 and 132, positions in the cylindrical member 150 in the longitudinal direction of the shaft 114 are stabilized.

This disclosure can be widely used for a structure in which a plurality of rotation bodies are inserted to the shaft to be fixed. In addition, this disclosure can be widely used for a structure in which the resolver rotors are mounted on the rotation shaft via another cylindrical member when inserting the resolver rotors to the rotation shaft to be fixed.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A fixing structure of a resolver rotor comprising:
a rotation shaft (14, 114); and
a plurality of resolver rotors (31, 32, 131,132) that are inserted to an outer peripheral surface of the rotation shaft from the same side,
wherein each of the resolver rotors includes a plurality of claw portions (43, 143, 63) intermittently abutting against the rotation shaft along a circumferential direction of the rotation shaft, and
wherein when viewed in a direction along a longitudinal direction of the rotation shaft, each of the resolver rotors is fixed to the rotation shaft such that a part of regions, in which claw portions of the resolver rotors inserted to the rotation shaft later abut against an outer peripheral surface of the rotation shaft, is disposed in a position different from regions in which the claw portions of the resolver rotor that is firstly inserted abuts against the outer peripheral surface of the rotation shaft.

2. The fixing structure of a resolver rotor according to claim 1,
wherein the claw portions included in each of the plurality of resolver rotors are provided in different positions when viewed in the direction along the longitudinal direction of the rotation shaft.

3. The fixing structure of a resolver rotor according to claim 1 or 2,
wherein the claw portions are provided in positions different from a radially inner side of a portion which contributes to measurement of a rotational position in an outer peripheral surface of the resolver rotor.

4. The fixing structure of a resolver rotor according to any one of claims 1 to 3,
wherein a length of the claw portion extending along the circumferential direction extends in the circumferential direction in an inner peripheral edge of the resolver rotor and is set shorter than a length between the adjacent claw portions.

5. A fixing structure of a resolver rotor comprising:
a rotation shaft (14, 114);
a resolver rotor (31, 32, 131,132) that is provided on a radially outer side of the rotation shaft; and
a cylindrical member (150) that is provided between the rotation shaft and the resolver rotor,
wherein the cylindrical member has a first abutting portion (151) that abuts against an outer peripheral surface of the rotation shaft and a second abutting portion (152) that abuts against an inner peripheral surface of the resolver rotor, and
wherein the first abutting portion and the second abutting portion are provided in positions different from each other in a longitudinal direction of the rotation shaft.

6. The fixing structure of a resolver rotor according to claim 5,
wherein the cylindrical member includes an alignment portion (156) against which an end portion of the resolver rotor abuts.

7. The fixing structure of a resolver rotor according to claim 5 or 6,
wherein the cylindrical member includes a separation portion (153) that is separated from the rotation shaft in a position corresponding to an radially inner side of the second abutting portion,
wherein the cylindrical member further includes a tapered portion (154) connecting between the first abutting portion and the separation portion, and
wherein when viewed in a direction orthogonal to an axial direction of the rotation shaft, a portion in a boundary position between the separation portion and the tapered portion has a rounded shape.

8. The fixing structure of a resolver rotor according to any one of claims 5 to 7,
wherein the resolver rotor is one of a plurality of resolver rotors, a first resolver rotor (31) is provided on one end side of the cylindrical member along the longitudinal direction of the rotation shaft, and a second resolver rotor (32) is provided on the other end side of the cylindrical member.

9. The fixing structure of a resolver rotor according to claim 8,
wherein the first resolver rotor and the second resolver rotor include claw portions (43, 143, 63) which intermittently abut against the cylindrical member along a circumferential direction of the rotation shaft, and are configured to have the same shape as each other, and
wherein the first resolver rotor and the second resolver rotor are disposed such that the claw portions of the first resolver rotor and the claw portions of the second resolver rotor are provided in different positions along the circumferential direction of the rotation shaft when viewed in the longitudinal direction of the rotation shaft.

10. A fixing structure of a rotation body for a motor comprising:
a rotation shaft (14, 114);
a plurality of rotation bodies (21, 22, 121, 122) that are inserted to an outer peripheral surface of the rotation shaft from the same side; and
a stator (23, 24, 123, 124) that faces the rotation body from a radially outer side,
wherein each of the rotation bodies includes a plurality of claw portions (43, 143, 63) which intermittently abut against the rotation shaft along a circumferential direction of the rotation shaft, and
wherein each of the rotation bodies is fixed to the rotation shaft such that a part of regions, in which when viewed in a direction along a longitudinal direction of the rotation shaft, claw portions of the rotation body inserted to the rotation shaft later abut against an outer peripheral surface of the rotation shaft, is disposed in a position different from regions in which the claw portion of the rotation body that is firstly inserted abuts against the outer peripheral surface of the rotation shaft.
